# EUROPÄISCHE PATENTSCHRIFT

(11) **EP 1 902 345 B1**
(45) Veröffentlichungstag und Bekanntmachung des Hinweises auf die Patenterteilung: **27.11.2019**
(21) Anmeldenummer: 06777676.5
(22) Anmeldetag: 10.07.2006
(51) Int. Cl.: G05B 19/042

(54) **SPEICHER MIT DATENABGLEICH AUS EINEM UND FUER EINEN ANTRIEBSREGLER EINER MASCHINE**
MEMORY WITH DATA SYNCHRONIZATION FROM AND FOR A DRIVE CONTROLLER OF A MACHINE
MEMOIRE A ALIGNEMENT DES DONNEES A PARTIR D'UN REGULATEUR D'ENTRAINEMENT D'UNE MACHINE ET DESTINEE A CE REGULATEUR D'ENTRAINEMENT

(30) Priorität: 08.07.2005 DE 102005032075
(43) Veröffentlichungstag der Anmeldung: 26.03.2008
(73) Patentinhaber: Lenze Automation GmbH, 40667 Meerbusch (DE)
(72) Erfinder: EHLICH, Martin, 32689 Kalletal (DE)
(74) Vertreter: Leonhard, Frank Reimund
(86) Internationale Anmeldenummer: PCT/EP2006/064069
(87) Internationale Veröffentlichungsnummer: WO 2007/006774

(56) Entgegenhaltungen:
- EP-A- 1 548 527
- EP-A1- 0 896 265
- EP-A2- 1 369 755
- EP-A2- 1 400 877
- DE-C1- 10 024 322
- DE-U1- 9 313 750
- DE-U1- 29 706 969
- US-A- 5 616 894
- US-A1- 2005 097 541

## Beschreibung

Die Erfindung befasst sich mit einem Arbeitsverfahren bei einem elektro-maschinellen Antriebsreglersystem, welches zumindest eine Maschine als Antrieb und eine Maschinensteuerung beinhalten, wobei letztere Steuerung einen Leistungsteil und einen Steuerteil aufweist.

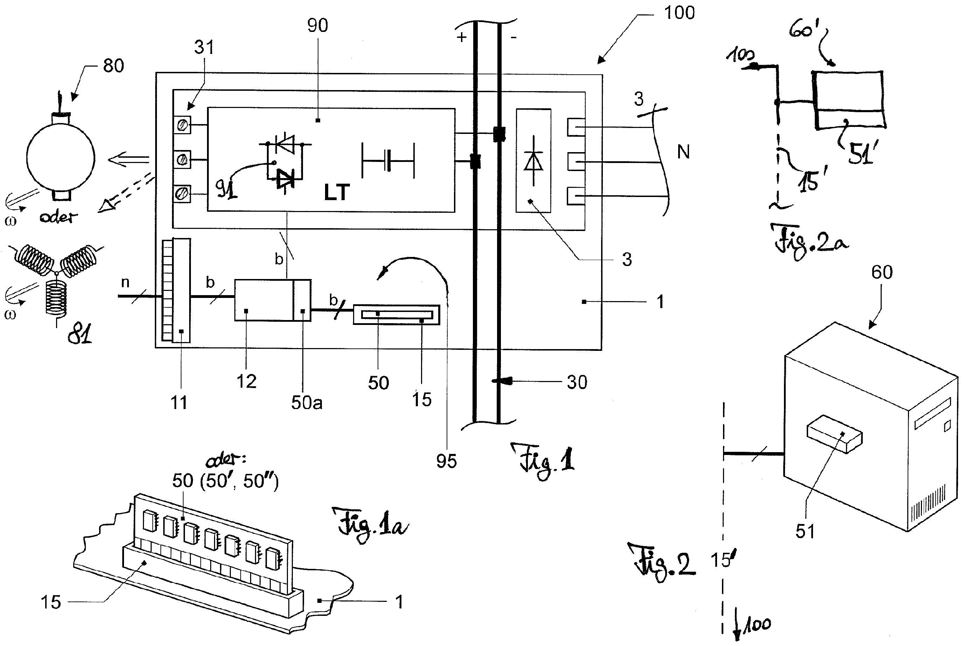

Im Stand der Technik hat es sich als aufwendig erwiesen, eine Inbetriebnahme kostengünstig durchzuführen, vgl. EP 1548 527 A1, dort Abs. [07]. Die zwei dort beschriebenen Systeme, ein Steuerungssystem oder ein Regelungssystem, können mit Parametern zur Parametrierung der Steuerungseinrichtung (oder der Reglungseinrichtung, dort Abs. [044]) versehen werden. Ausgangspunkt ist eine Flashcard oder eine Festplatte, dort Abs. [038], die Default-Werte enthält, die über eine Datenleitung, dort 20 in einen Speicherbereich kopiert werden. Über ein ebenfalls kopiertes Makro, das auch in die Anwendungsumgebung geladen wird, dort Leitung 19 werden Werte berechnet, die an den Antrieb angepasst sind. Diese "korrekten Parametern" werden auch im Speicherbereich (dort 22) gespeichert und auf dem nicht flüchtigen Speichermedium 11 (Flashcard oder Festplatte) gespeichert, wobei die Default-Parameter der Default-Parameterdatei von den neuen, nunmehr korrekten Parametern überschrieben werden, was durch eine Datenleitung in der dortigen Figur 2 angedeutet ist. Alternativ können die Parameter auch in einer separaten Datei gespeichert werden. Bei einem zukünftigen Hochfahren der Steuerungseinrichtung werden nunmehr korrekte Parameter der Datei 13 in den Speicherbereich 22 geladen, sodass die Steuerungseinrichtung sofort die richtigen Parameter zur Verfügung hat, ohne dass ein Makro oder der Interpreter 10 benötigt wird.

US 2005/097541 A1 veranschaulicht eine Fahrzeug Software Installation, als Upgrade, bei der Diagnose Information zwischen Fahrzeug-Prozessoren und einem externen Prozessor durch einen tragbaren Speicher übertragen werden. Für diese Installation an der Fertigungslinie von Fahrzeugen wird nach Abs. 012 ein externer Prozessor an der Fertigungslinie benötigt, mit vielen preiswerten portablen Speicher-Einrichtungen. Diese Speicher dienen zum Übertragen eines Feedbacks, um dem externen Prozessor Diagnose Informationen zukommen zu lassen, und zu erkennen, ob die Software-Installation und die Testprozeduren am Fahrzeug erfolgreich verlaufen sind, dort Absatz 014. Der Weg der Daten erfolgt vom Prozessor an die Fertigungslinie zum Fahrzeug und vom Fahrzeug zurück zum genannten Prozessor.

Inbetriebnahme-Handlungen für erstellte Anlagen aus Maschinen und Maschinensteuerungen benötigen derzeit immer ein Bediengerät. Dieses ist zumeist ein PC oder eine Anzeigeeinheit mit Bedienkonsole, welche von einem geübten und erfahren Benutzer eingesetzt wird, um über eine Schnittstelle die Maschinensteuerung auf die Maschine und die hier betroffene Anwendungsumgebung einzustellen. Mehr und mehr werden die Einstellungen automatisiert, also weitgehend selbst-einstellend oder selbst-identifizierend, dennoch bildet die Grundlage für eine solche Identifikation immer die Inbetriebnahme durch einen geübten Benutzer oder antriebstechnisch versierten Ingenieur, der sich über die Möglichkeiten und die Notwendigkeiten der einzustellenden Anwendungsumgebung zuvor informiert hat.

Eine Aufgabe der Erfindung liegt darin, die Inbetriebnahme zu vereinfachen. Insbesondere soll sie so vonstatten gehen können, dass in einem Servicefall ein schneller und sicherer Gerätetausch möglich wird und nicht anschließend erneut ein qualifiziertes Bedienpersonal notwendig ist, um in derselben Anwendungsumgebung wieder eine Inbetriebnahme vorzunehmen.

Erreicht wird das mit der Lösung nach Anspruch 1. Das Verfahren arbeitet mit einem Boot-Speicherbereich und einer Übertragung von maschinenbezogenen Daten aus diesem Boot-Speicherbereich in die Anwendungsumgebung, welche die Maschinensteuerung ist. Dort ist ein Spiegelboot-Speicherbereich vorgesehen, der zumindest einem Abschnitt des normalen Arbeitsspeichers entspricht, welcher von der Maschinensteuerung für die Regelung des Betriebs der Maschine verwendet wird. Als Serieninbetriebnahme wird sie so durchgeführt, dass kein Spezialwissen benötigt wird, der geübte Ingenieur für die Inbetriebnahme nicht vor Ort kommen muss und keine zusätzlichen Bedienelemente oder Bediengeräte portiert und angeschlossen werden müssen, um über die Schnittstelle Voreinstellungen der maschinellen Antriebsumgebung vorzunehmen.

Wird der Speicherbereich als Modul entnommen, kann er an anderer Stelle in ein nicht dargestelltes, aber der Figur 1 entsprechendes, vergleichbares System übernommen werden. Eine Serien-Inbetriebnahme ist vereinfacht möglich. Ein System wird in Betrieb genommen, beginnend mit einem Satz von ersten und zweiten Parametern im Boot-Speicherbereich. Es schließt sich eine Zeitspanne des Betriebs an, in der eine Aktualisierung der maschinenbezogenen Daten in dem Boot-Speicherbereich stattfindet, und dieser Speicher kann dann entnommen und beim nächsten System zur Inbetriebnahme verwendet werden.

Die "maschinenbezogenen Daten" sind zumindest erste Parameter und mehrere anwendungsspezifische zweite Parameter, die sich auf das Antriebsregelsystem beziehen. Die ersten Parameter sind Einstellungen erzeugende Einstellwerte. Die zweiten Parameter sind anwendungsspezifische Parameter, unter denen auch Anwendungsprogramme (oder Teile davon) sein können(.

Die Anwendungsprogramme sind auf den jeweils spezifischen Anwendungsfall zugeschnitten bzw. darauf angepasst. Die Anpassung ermöglicht es, dass die aus dem Boot-Speicherbereich in den Spiegelboot-Speicherbereich übernommenen Daten die Inbetriebnahme darstellen, wobei die alleinige Übertragung (und Speicherung) dieser Daten in dem Spiegelboot-Speicherbereich den Inbetriebnahmevorgang im Wesentlichen abschließt.

Weitere Anpassungen werden dann über Identifikationen oder Selbsteinstellungen von der Maschinensteuerung selbst vorgenommen und die entsprechend veränderten ersten Parameter überschreiben dabei die Werte in denselben Speicherzellen in dem Spiegelboot-Speicherbereich.

Eine Umschreibung der "maschinenbezogenen Daten" ist so vorzunehmen, dass diese für einen Betrieb der Maschine ausreichend und notwendig gleichermaßen sind. Es sind also alle notwendigen Daten, die für den Betrieb vorhanden sein müssen. Es sind gleichzeitig hinreichend oder genügend Daten und Anwendungsprogramme, die einen Beginn des regulären Betriebs der Antriebsumgebung ermöglichen. Es handelt sich dabei nicht um einige wenige Daten, oder um einige wenige Parameter, sondern um wirklich relevante Parameter als maschinenbezogene Daten, ohne die eine Inbetriebnahme und ein Betrieb der Anwendungsumgebung nicht möglich wäre.

Der Boot-Speicher(bereich) selbst ist abnehmbar, kann also abgesteckt und wieder eingesteckt werden, bezogen auf die Maschinensteuerung.
Der Betrieb sorgt demnach dafür, dass die in der Betriebsumgebung gewonnenen Erfahrungen, in Gestalt von geänderten Parametern oder umgestellten Regelformen auch zurückgelernt werden, welcher Rücklernvorgang ein Datenabgleich ist, mit dem die jeweils entsprechenden Speicherzellen in dem Boot-Speicherbereich überschrieben und aktualisiert werden.

So schafft die Erfindung die Voraussetzung dafür, dass ein späteres Austauschen der Anwendungsumgebung, also der Maschine, der Maschinensteuerung oder Komponenten dieser Maschinensteuerung nicht zu einer neuen Inbetriebnahme führen muss, ohne die gelernten und für den Anwendungsfall sehr spezifischen und genau passenden Parameter erster und zweiter Natur neu lernen oder neu eingeben zu müssen. Sie können vielmehr unmittelbar zu oder bei einer erneuten Inbetriebnahme aus dem Boot-Speicherbereich wieder in den Spiegelboot-Speicherbereich übertragen werden, dort gespeichert werden und die Maschinenanordnung ist trotz ihrer zweiten und ggf. weiteren Inbetriebnahme so vorbereitet, als ob nie ein Austausch von Bauteilen stattgefunden hätte.

Eine Serien-Inbetriebnahme wird damit sehr erleichtert, qualifiziertes Bedienpersonal ist nur noch selten, eigentlich nicht mehr erforderlich, Spezialwissen wird für die Inbetriebnahme und eine erneute Inbetriebnahme kaum benötigt und der Austausch kann dennoch sicher und zuverlässig erfolgen. Der "Servicefall" ist nicht mehr ein Anlass für eine längere Ausfallpause, sondern kann durch den zuständigen Herrn vor Ort oder den Anwender selbst in eine neue Inbetriebnahme umgesetzt werden.

Dabei hilft es, dass das Speichermodul keine feste, untrennbare Komponente des Antriebsreglers ist, sondern von ihm durch Abstecken gelöst und entfernt werden kann.

Letzterer portierbarer Speicher ist netzausfallsicher, also auf dauerhafte Speicherung angelegt, was bei dem Remote-Speicherbereich selbstverständlich ist, der nicht mit dem Antrieb abgeschaltet wird, sondern unabhängig von diesem arbeitet.

Der Speicherbereich enthält alle anwendungsspezifischen Parameter und Programme, die für die Antriebsumgebung benötigt werden. Einmalig findet beim erstmaligen Inbetriebnehmen (und auch bei jeder Folge-Inbetriebnahme) eine Übertragung der ersten und zweiten Parameter im beschriebenen Sinn von dem Boot-Speicherbereich in den Spiegelboot-Speicherbereich statt. Die Erstmaligkeit erkennt die Maschinensteuerung an nicht gültigen Parametern und nicht gültigen Programmen im Spiegelboot-Speicherbereich. Ist eine solche Übertragung einmal vorgenommen, erfolgt die weitere Steuerung der Maschinensteuerung nur aus dem Spiegelboot-Speicherbereich.

Es ist zu vermeiden, dass eine Steuerung mit ersten oder zweiten Parametern, insbesondere mit Anwendungsprogrammen, aus dem Boot-Speicherbereich erfolgt. Letzterer muss und wird vor einem regulären Betrieb erst in den Spiegelboot-Speicherbereich übertragen, dort gespeichert und alle diesbezüglich dort enthaltenen Dateninformationen werden dabei gelöscht.

In entsprechender umgekehrter Anwendung wird nach und nach, also zumindest eine Rückübertragung stattfinden, welche den Boot-Speicherbereich hinsichtlich der ihm zugeordneten Anwendungsumgebung spezieller und angepasster werden lässt.

Dieser Datenabgleich kann so ausgebildet werden, dass Anwendungsprogramme als solche nicht überschrieben werden, allenfalls zumindest eine von ihnen vorgegebene Struktur zumindest eines Reglers, die als änderbar definiert war, durch die Speicherung geändert wird. Andererseits kann das bewusste Überschreiben von zumindest Teilen von Anwendungsprogrammen vorgesehen werden. Ein Überschreiben und Neudefinieren eines Programmsegmentes, beispielsweise als ein Reglerprogramm oder ein Überwachungsprogramm, erfolgt als Teil der zweiten, anwendungsspezifischen Parameter. Dem kann eine Änderung oder Aktualisierung im Arbeitsspeicher der Maschinensteuerung vorangehen, beispielsweise durch ein PC-Tool, das direkt auf den Arbeitsspeicher des Antriebsreglers wirkt. Eine so vorgenommene Programmänderung wird bei einem Datenabgleich zum Modul mit dem Boot-Speicher übertragen und überschreibt dort das entsprechende Anwendungsprogramm oder zumindest einen Teil eines größeren Anwendungsprogramms(. Bei der Inbetriebnahme, oder alternativ bei einer erneuten Inbetriebnahme kann auch der umgekehrte Weg gewählt werden(. Aus dem Boot-Speicherbereich werden Anwendungsprogramme zumindest teilweise übertragen und überschreiben die korrespondierenden Anwendungsprogramme (oder zumindest Teile davon), die in dem Spiegelboot-Speicherbereich des Arbeitsspeichers der Maschinensteuerung gespeichert waren.

Geht man von einer Datenübertragung aus, schließt sich an diese Datenübertragung der maschinenbezogenen Daten auch eine Änderungsspeicherung an. Diese Änderung ist abschließend und definitiv, ohne dass die zuvor an dem Ort der Änderungsspeicherung (an dem auf der Maschinensteuerung angeordneten Spiegelboot-Speicher) eine Sicherungskopie zurückbehalten wird.

Mit anderen Worten kann man davon sprechen, dass die Maschinensteuerung zunächst als Slave arbeitet, gesteuert von dem Master, welcher der Boot-Speicherbereich ist. Nach einer Übertragung aus dem Master-Speicherbereich in den Slave-Speicherbereich, übernimmt die Maschinensteuerung die Eigenschaft als Master, und behandelt den Boot-Speicherbereich als einen Backup-Speicher im Sinne eines Slave. Dorthin werden aktualisierte maschinenbezogene Daten als erste und zweite Parameter geschrieben und sie löschen (überschreiben) die entsprechenden Parameter, welche der Boot-Speicherbereich bei der ersten Inbetriebnahme bereitstellte.

Diese Zuordnung ist aber nicht unabänderlich, sondern führt zu ihrer erneuten Invertierung, wenn die Maschinensteuerung neu in Betrieb genommen werden muss, also ein Austausch von Komponenten stattgefunden hat oder ein sonstiger Servicefall eingetreten ist. Dann erhält erneut der Boot-Speicherbereich die Master-Funktion, bis zur Übertragung der von ihm für diese Anwendungsumgebung gehaltenen ersten und zweiten Parameter. Alle diese maschinenbezogenen Daten werden übertragen und gespeichert, ungeachtet eventueller Reste oder Überreste in dem Spiegelboot-Speicherbereich, so dass die allgemein verstandene Inbetriebnahme sichergestellt ist.

Aufgrund des Systems der Zuordnung der jeweils übergeordneten Master-Funktion kann dabei auch langfristig sichergestellt werden, dass keine ersten und zweiten Parameter für die Anwendungsumgebung verloren gehen, sie werden vielmehr sukzessive im Laufe des Betriebs in den Boot-Speicherbereich retourniert und dort überschrieben alternativ von dort als Package oder Bündel bei einer Inbetriebnahme erneut übernommen.

Ein Triggern einer solchen Übertragung kann auf viele Arten erfolgen. Eine davon war bereits angesprochen worden, durch Erkennung auf gültige Parameter oder gültige Programme im Spiegelboot-Speicherbereich. Eine weitere ist das Anschalten des Antriebssystems, bei welchem eine Übertragung aus dem Boot-Speicherbereich getriggert wird. Das Triggern steht für ein Anstoßen einer Routine, welche zunächst die Übertragung vornimmt, um dann die Steuerung der Maschinensteuerung zu übergeben, welche mit den übertragenen Daten aus dem Arbeitsspeicher anschließend arbeitet.

Eine weitere mögliche Triggerung eines Übertragungsvorgangs liegt bei einem Ausschaltvorgang. Um sicherzustellen, dass ein Ausschaltvorgang alle zuletzt gültigen ersten und zweiten Parameter aus dem Arbeitsspeicher in den Boot-Speicher überträgt, kann eine zweite Routine gestartet werden, welche zunächst die vollständige Übertragung vornimmt, um dann die Abschaltung der Antriebsanlage freizusteuern.

Die in dem Boot-Speicherbereich vorgehaltenen Daten müssen noch keine vollständig spezifischen Daten sein, sondern können eine gewisse Verallgemeinerung in sich tragen, welche sogenannte Default-Einstellungen sind. Sie sind zumindest nicht vollständig auf die Anwendung ausgerichtet, können aber auch überhaupt nicht auf die Anwendung ausgerichtet und zugeschnitten sein. Die Anpassung dieser Rohinformation findet erst im Betrieb des Antriebssystems statt. Von dort wird sie dann im Wege des Datenabgleichs auch in den Boot-Speicherbereich zurück übertragen, um diesen Speicherbereich für künftige Inbetriebnahmen besser auf die vorhandene Anwendungsumgebung zuzuschneiden.

Eine Art der Vervielfachung im Sinne eines Klonens der Speicherinformation im Boot-Speicherbereich ergibt sich, wenn dieser ein- oder mehrfach unterteilt wird.

Das Zurückspeichern oder der Datenabgleich im vorgenannten Sinne eines Rücklernens findet dann parallel auf zumindest zwei geteilte Boot-Speicher statt, so dass einer davon entnommen werden kann und in einem anderen Antrieb als Haupt-Boot-Speicher eingesetzt werden kann. Die Vervielfachung dieser so gewonnenen Antriebsinformation aus einer Inbetriebnahme und einem zum Betriebszeitraum eines ersten Antriebs auf eine zweite Antriebsumgebung ermöglicht die Vervielfachung und Erleichterung einer Serien-Inbetriebnahme.

Sie kann statt dieser Serien-Inbetriebnahme aber auch darauf ausgerichtet sein, die Sicherheit und Redundanz zu erhöhen, so dass einer der Boot-Speicherbereiche in der Maschinensteuerung verbleibt, zur jeweiligen Aktualisierung, und ein zweiter als Backup entnommen wird und im Schaltschrank an einer sicheren Stelle verwahrt wird.

Die genannten Speicher, welche den Boot-Speicherbereich bilden, sind Schreib-Lese-Speicher mit einer zumindest als schnell zu bezeichneten Zugriffszeit. Sie sind keine CD-ROMs oder andere wieder-beschreibbare Datenträger, die man als träge und langsam bezeichnen würde. Meist werden die Speicher als elektrische Speicherzellen ausgebildet, beispielsweise als portabler "Speicherstick" in Gestalt eines tragbaren Speichers mit beispielsweise USB-Schnittstelle zur Maschinensteuerung.

Es ist nicht erforderlich, einen großen Speicher im Sinne von Speicherkapazitäten oberhalb von 10 MB zur Verfügung zu stellen, welche von heutigen portablen Speichersticks zur Verfügung gestellt werden. Es schadet aber nicht, wenn die Handhabbarkeit oder Robustheit einer solchen Speichereinrichtung mehr Speicher umfasst, als für das eigentliche Speichervolumen des Boot-Speicherbereichs benötigt wird. Hier reichen schon wesentlich kleinere Datenmengen, welche notwendig und genügend für die Antriebsumgebung sind(, um diese durch die Inbetriebnahme aus dem Boot-Speicherbereich für einen selbsttätigen Betrieb zu ertüchtigen.

Vorteilhaft weitergebildet wird das Verfahren mit dem entnehmbaren Boot-Speicherbereich dadurch, dass eine automatische Triggerung erfolgt, wenn während des Betriebs, also während eines ordnungsgemäßen Betriebs des elektro-maschinellen Antriebsreglersystems ein Boot-Speicherbereich in die entsprechende Steckaufnahme eingesteckt wird. Die Maschinensteuerung wird das so interpretieren, dass die vorhandenen ersten und zweiten Parameter von dem eingesteckten Boot-Speicherbereich abgefragt werden und speichert vorhandene maschinenbezogene Daten aus dem Arbeitsspeicher in den Boot-Speicher zurück. Die dort vorhandenen Daten werden entweder vollständig überschrieben, oder nur insoweit überschrieben, als über einen Vergleich Abweichungen festgestellt wurden. Der Vergleich aktualisiert nur diejenigen Daten in dem Boot-Speicherbereich, welche nicht denjenigen maschinenbezogenen Daten, die im Arbeitsspeicher aktuell sind, entsprechen. Die Rückübertragung und das oben so genannte Rücklernen aus dem Arbeitsspeicher erfolgt in einem Übertragungsblock.

Wird der Boot-Speicherbereich nicht gleich nach dem Abschluss des Datenblocks herausgenommen, erfolgt die Aktualisierung seiner maschinenbezogenen Daten auf einer Zufallsbasis, die sich entsprechend der jeweiligen Aktualisierung im Hauptspeicher der Maschinensteuerung ausrichtet. Es wird dann "case by case" aktualisiert, was den Datentransfer über die Schnittstelle zum Boot-Speicher entlastet.

Ausführungsbeispiele erläutern und ergänzen die beanspruchte Erfindung.
- **Figur 1**: veranschaulicht ein Ausführungsbeispiel in schematischer Darstellung einer Maschinensteuerung 100 für eine Maschine, die in zwei Anwendungsfällen als Gleichstrommaschine 80 bzw. als eine Drehstrommaschine 81 abgebildet ist.
- **Figur 1a**: ist eine Ausschnittsvergrößerung aus Figur 1 in schräger Seitenansicht, mit einem abziehbaren Speichermodul 50, welches über eine Stecker- oder Buchsenleiste 15 (Kontaktleiste) mit der Hauptplatine 1 der Maschinensteuerung 100 elektrisch verbunden ist. Die elektrische Verbindung und die mechanische Verbindung sind beide lösbar, und werden gelöst, wenn das Modul 50 von der Kontaktleiste 15 abgezogen wird.
- **Figur 2**: veranschaulicht ein zweites Ausführungsbeispiel in schematischer Darstellung einer Maschinensteuerung 100 mit einem Remote-Speicher 51 in einem Host 60.
- **Figur 2a**: veranschaulicht ein drittes, mehr schematisches Ausführungsbeispiel einer Maschinensteuerung 100 mit einem Remote-Speicher 51' bei einem Host 60'.

**Figur 1** ist eine schematische Aufsicht auf eine Maschinensteuerung 100, welche auf einer Platine 1 ausgeführt ist. Die Platine 1 nimmt einen Leistungsteil LT oder 90 auf, der aus Leistungsschaltern 91 besteht, welche von einem Gleichspannungs-Bussystem 30 aus einen steuerbaren Wechselstrom erzeugen, der über die Ausgangsklemmen 31 auf eine Dreiphasen-Maschine 81 übertragen werden. Wird eine Gleichstrommaschine 80 verwendet, so sind keine drei, sondern zwei Ausgangsklemmen 31 vorgesehen.

Die Arbeitsweise und Betriebsweise eines Leistungsteils 90 zur Steuerung einer Gleichstrommaschine oder zur Steuerung einer zwei- oder mehrphasigen Wechselstrommaschine sind allgemein in der Fachtechnik bekannt, so dass die näheren Erläuterungen der Funktionsweise des Leistungsteils 90 hier nicht gegeben wird, sondern auf Literatur verwiesen werden kann.

Eingang N bildet ein Mehrphasensystem, welches über den Gleichrichter 3 für eine oder mehrere Maschinensteuerungen 100 gleichermaßen gleichgerichtet und zur Bildung des Bussystems 30 herangezogen wird.

Die Ansteuerung des Leistungsteils 90 auf der Maschinensteuerung soll hier ein besonderes Augenmerk erhalten. Dieser Funktionsabschnitt ist 95 benannt und er besteht aus einem Reglerbereich 12 mit zumindest einem, bevorzugt aber mehreren auf die Maschine bezogenen Reglern, wie Lageregelung, Stromregelung oder anderen anwendungsspezifische Regelungen. Der Bezug auf die Maschine ist so zu sehen, dass natürlich auch andere die Maschine betreffende Größen, wie der Strom oder die Lage oder die Beschleunigung von den Reglern im Reglerbereich 12 beeinflusst werden kann, veranlasst von Soll-Werten und gerichtet auf Stellgrößen im Leistungsteil 90. Teil des Reglerbereich 12 ist ein Speicherbereich 50a, welcher einen Teil eines größeren Speichers bildet, der den Arbeitsspeicher darstellt. Dieser ist aus wiederbeschreibbaren Speicherzellen von Speicherbaugruppen gebildet, die anwendungsbezogen schnell gelesen werden können.

Alle Systeme sind in diesem Steuerbereich an einen Bus gekoppelt, welcher eine Busbreite b besitzt, und einerseits zu einer Messwert-Erfassung 11 verzweigt ist, andererseits zu einem Sockelabschnitt 15, der einen zweiten Speicherbereich 50 steckbar und entnehmbar aufnimmt, bspw. als Kontaktleiste.

Von dem Reglerbereich 12 führen Steuersignale entweder über den Bus oder über dezidierte Steuerleitungen zum Leistungsteil 90, um die Stellgrößen und/oder die Stellsignale dieses Leistungsteils vorzugeben und die Maschine entsprechend zu steuern, als Motor und/oder Generator.

Der Sockel 15 nimmt einen Speicherabschnitt 50 auf, der als Modul ausgebildet ist, und verbindet dessen elektrische Anschlussklemmen mit dem Bus der Datenbreite "b". Eine mechanische Stabilität wird ebenfalls bereitgestellt, so dass das Speichermodul 50 sicher in dem Sockel 15 sitzt, darin aufgenommen ist, gleichwohl aber leicht entnommen werden kann.

Nicht dargestellt, sondern Bestandteil der jeweiligen Speicherbereiche, sind die Parameter als solche, welche die Steuerung beeinflussen. Parameter sind solche, welche anwendungsspezifisch sind und solche, welche nicht explizit Parameter sind, sondern wie Parameter gehandhabte Anwendungsprogramme darstellen, die in dem Arbeitsspeicher 50a Platz finden.

Der Speicherbereich 50, der entnehmbar ist, soll als Boot-Speicherbereich benannt werden. Hier sind Daten abgelegt, welche die genannten Parameter darstellen. Es sind Parameter, welche die Einstellung des Leistungsteils beeinflussen: Grenzwerte, Vorgabewerte und sonstige Einstellparameter. Diese sollen "erste Parameter" genannt werden. "Zweite Parameter" sind solche, welche anwendungsspezifisch sind, auch mit Bezug auf die Art und Ausbildung der Maschine. Diese wird zweite Parametergruppe benannt. Zu dieser gehören auch Anwendungsprogramme, welche bestimmte Reglertypen sein können, bestimmte Grenzwerterkennungen oder spezifische Steuerabläufe umfassen können, die für eine "spezifische Anwendung" oder für eine spezifische Maschine benötigt werden.

All diese Programme und Parameter sind in einem normalen Betriebsfall im Arbeitsspeicher 50a abgelegt.

Soll eine Anwendung erstmalig in Betrieb genommen werden, so ist die Maschinensteuerung weitgehend frei von spezifischen Vorgaben der genannten Art von ersten und zweiten Parametern, die erst von einem Inbetriebnahme-Ingenieur über eine hier nicht dargestellte Schnittstelle dem Antriebssystem vorgegeben werden müssen. Eine spezifische Ausbildung des hier umschriebenen Beispiels ist es aber, dass ein solcher Inbetriebnahme-Ingenieur über Schnittstellen keine zusätzlichen Voreinstellungen vornehmen muss. Diese werden vielmehr über das Modul 50 (als Speichermodul) vorgenommen, das im Sockel 15 Platz findet und über den Bus b und eine Routine im Reglerbereich 12 (oder auf dem Speichermodul 50) als gesamtes Segment von ersten und zweiten Parametern in den Arbeitsspeicher 50a übertragen wird. Diese Übertragung aus dem Boot-Speicherbereich 50 des Moduls auf den Sockel 15 geschieht anfangs, nach einem erstmaligen Einschalten der Maschinensteuerung 100 mit der zugehörigen Maschine 80 oder 81. Der Boot-Speicherbereich 50 überträgt dabei alle auf ihm vorgesehenen maschinenbezogenen Daten, welche zumindest die genannten ersten und zweiten Parameter als Gruppen umfasst. Insbesondere ist im Rahmen der zweiten Gruppe auch zumindest ein Anwendungsprogramm vorgesehen, was ebenfalls mit übertragen und lauffähig im Arbeitsspeicher 50a abgespeichert wird.

Die Übertragung dieser Summe von maschinenbezogenen Daten aus dem Modul endet, wenn alle für einen Betrieb der Maschine und der Maschinensteuerung notwendigen Parameter (erste und zweite Gruppe) übertragen worden sind.

Dann ist die Maschinensteuerung 100 autark und kann mit Hilfe des Reglerabschnitts 12 und den bei der Inbetriebnahme übertragenen maschinenbezogenen Daten im Arbeitsspeicher 50a eigenständig arbeiten. Ein Zugriff oder Rückgriff auf den Boot-Speicherbereich für diese Arbeitsweise findet nicht statt. Es wird aber eine Rückaktualisierung vorgenommen, die sich durch beispielsweise selbsteinstellende Systeme im Reglerbereich 12 ergeben. Die sich selbst einstellenden oder lernenden Systeme verändern bestimmte Parameter, die anwendungsbezogen sind, und legen die entsprechend veränderten Parameter an die Stelle der Ausgangsparameter in den entsprechenden Speicherzellen ab. In einer hier nicht dargestellten aber leicht vorstellbaren Routine des Ablaufprogramms ist vorgesehen, dass aktualisierte Parameter in der ersten oder zweiten Gruppe von Parametern nach und nach, je nach Aktualisierungszustand, in den Boot-Speicherbereich 50 zurück geschrieben werden. Dort ersetzen sie die Ausgangswerte.

Der physische Boot-Speicher 50 wird also im Zuge des Betriebs des Antriebssystems 100, 80 aktualisiert, es wird rückgelernt und die Boot-Speicherinformation bleibt nicht unverändert.

Falls das Reglersystem mit Maschine 100, 80 abgeschaltet wird, steht die vollständige Information über den erreichten Systemzustand in dem modularisierten Speicherbereich 50 zur Verfügung. Bei einem erneuten Einschalten, entsprechend einem zweiten Inbetriebnehmen, werden all diese maschinenbezogenen Daten erneut abgefragt und in den korrespondierenden Spiegelboot-Speicherbereich 50a übernommen, der den Arbeitsspeicher bildet.

Damit erreicht das System eine Backup-Kopie in dem entnehmbaren Speicher 50, welche Backup-Kopie nicht statisch ist, sondern sich dynamisch an jeweils neu gefundene und adaptierte Betriebszustände anpasst.

Wird der Speicherbereich als Modul entnommen, kann er an anderer Stelle in ein nicht dargestelltes, aber der Figur 1 entsprechendes, vergleichbares System übernommen werden. Eine Serien-Inbetriebnahme ist vereinfacht möglich. Ein System wird in Betrieb genommen, beginnend mit einem Satz von ersten und zweiten Parametern im Boot-Speicherbereich 50. Es schließt sich eine Zeitspanne des Betriebs an, in der eine Aktualisierung der maschinenbezogenen Daten in dem Boot-Speicherbereich stattfindet, und dieser Speicher kann dann entnommen und beim nächsten System zur Inbetriebnahme verwendet werden.

Es ist ersichtlich, dass der Begriff der Inbetriebnahme hier allgemeiner verstanden wird. Er versteht sich so, dass ein erstmaliges Beginnen eines Betriebs erfasst ist, ebenso wie ein erneutes Beginnen eines Betriebs. Er erfasst aber auch das erneute Einschalten des Systems, welches bereits früher in Betrieb genommen wurde.

In einem nicht dargestellten Ausführungsbeispiel, das aber leicht aus der Figur 1 abgeleitet werden kann, ist der Sockel 15 als eine Datennetz-Kopplung 15' vorgesehen. Diese Datennetz-Kopplung führt weg von der Maschinensteuerung 100, hin zu einer physisch weit entfernten Datenanlage, welche in der Lage ist, Daten zu speichern und den Bus bidirektional zu bedienen. Dieser als "Remote" zu beschreibende Host nimmt die Daten auf und erlaubt ein Abschalten der Maschinensteuerung. Er gibt die Daten nach einem Einschalten der Maschinensteuerung über die Bus-Steuerung im Rahmen der Einstiegsroutine wieder zurück. Sie werden dort in dem Spiegelboot-Speicherbereich 50a abgelegt, und dann im Zuge des Betriebs über die Datennetz-Kopplung (entsprechend der Kontaktleiste 15) nach und nach aktualisiert und nachgeführt. Es ist ersichtlich, dass der als entnehmbares Modul ausgebildete Speicher 50 hier als Remote-Speicher 51 ausgebildet ist, der nicht entnehmbar und portierbar sein muss, der aber funktionell vergleichbar arbeitet.

So zeigt Figur 2 schematisch einen Host 60, der einen Remote-Speicherbereich 51 aufweist. Der Host ist über die Datennetz-Kopplung 15' mit der Maschinensteuerung 100 verbunden, wobei diese Datennetz-Kopplung über einen entsprechenden Steckkontakt auf der Steckerleiste 15 platziert werden kann, so dass der Host 60 mit seinem Boot-Speicherbereich 51 die gleiche Funktion übernehmen kann, wie der portierbare Speicher 50, nur ohne die Eigenschaft, selbst portierbar zu sein. Entsprechend arbeitet auch das schematische System der Figur 2a. 60' entspricht 60, 51' entspricht 51 nach der vorhergehenden Beschreibung.

Auch das Rückspeichern oder Rücklernen der im Betrieb neu gebildeten Parameter in den Remote-Speicherbereich 51 findet in dem zweiten und dritten Ausführungsbeispiel statt, nur nicht direkt auf der Platine 1 der Motorsteuerung, sondern über die Datenverbindung 15' zum Remote-Speicherbereich 51. Dieser ist deshalb zur Übertragung in beiden Richtungen vorgesehen, wobei diese Richtungen so zu verstehen sind, dass es einmal die Übertragung der gesamten maschinenbezogenen Daten aus dem Remote-Speicherbereich 51 in den Spiegelboot-Speicherbereich 50a ist, und in der anderen Richtung die nach und nach gebildete Aktualisierung des Boot-Speicherbereichs 51 in dem Remote-Host 60.

Der Reglerbereich 12 hat - wie oben ausgeführt - mehrere Regler, die spezifisch ausgebildet sein können, als bestimmte Reglertypen oder noch als offene Reglertypen unspezifisch vorgegeben sein können. Ihre spezifische Ausbildung erhalten sie erst nach dem Übertragen der Gruppe der zweiten Parameter aus dem Remote-Speicher 51 oder dem Modulspeicher 50 in den Arbeitsspeicher 50a. Dadurch werden noch unspezifische Regler zu spezifischen Reglern, die auf die Anwendungssituation zugeschnitten sind.

Die gesamten übertragenen maschinenbezogenen Daten, aus der ersten und der zweiten Gruppe von Parametern, definieren nach ihrer Übertragung und dem Einspeichern in den Arbeitsspeicher 50a die Eigenschaft der Maschinensteuerung 100.

Beim Datenabgleich der Rückführung der neu gelernten Parameter findet die Aktualisierung der Boot-Speicherbereiche 50 oder 51 statt, beispielsweise ohne dort die Programme zu überschreiben, welche anwendungsbezogen sind und als Anwendungsprogramm in unveränderter Form bei jedem Neustart oder bei jeder neuen Inbetriebnahme in den Arbeitsspeicher 50a übernommen werden. Der Datenabgleich zum Boot-Speicher ist also nicht so umfassend, wie die Datenübertragung vom Boot-Speicherbereich 50 oder 51 in den Arbeitsspeicher 50a.

Alternativ kann auch ein Programmsegment überschrieben werden. Beim Rücklernen erfolgt das Überschreiben im Boot-Speicher 50, beim Inbetriebnehmen im Spiegelboot-Speicher.

Nicht dargestellt ist die Arbeitsweise des Beginns der Übertragung von dem Boot-Speicherbereich 50 oder 51 in den Arbeitsspeicher 50a. Diese kann veranlasst werden durch ein Einschalten der Maschinensteuerung. Diese kann ebenfalls veranlasst werden durch ein Prüfprogramm, welches die im Arbeitsspeicher 50a vorhandenen ersten Parameter auf gültige Parameter oder die dort vorhandenen Pogramme als zweite Parameter auf Funktionsfähigkeit testet. Findet der Test kein positives Ergebnis, wird die Übertragung aus dem Boot-Speicherbereich 50 oder 51, je nach Ausführung, eingeleitet, durchgeführt und abgeschlossen, bevor der Maschinensteuerung 100 wieder die volle Steuergewalt als Master übergeben wird. Diese Steuergewalt als Master wird so lange fortgeführt, bis die Maschinensteuerung 100 abgeschaltet wird. Vor einem Freigeben eines solchen Abschaltens startet eine neue Routine, welche den Speicherbereich 50a im Arbeitsspeicher vollständig auf den Boot-Speicher nach Figur 1a oder nach Figur 2 überträgt. Erst nach Abschluss dieses Übertragungsvorgangs kann das Abschalten der Maschinensteuerung 100 freigeschaltet werden.

Damit ist sichergestellt, dass bei einem neuen Einschalten oder bei einem Entnehmen des portierbaren Boot-Speichers 50 für einen anderen Inbetriebnahme-Fall immer die aktuellen maschinenbezogenen Daten in dem Boot-Speicher liegen, von wo sie beim Einschalten oder beim Inbetriebnehmen in den Arbeitsspeicher 50a durch die zuvor beschriebene erste Routine übernommen werden.

Abwandlungen der beschriebenen Arbeitsverfahren sind im Rahmen der nachstehenden Möglichkeiten günstig.

Ein erstmaliges Inbetriebnehmen erfolgt ohne eine spezifische Ausgestaltung auf einen jeweiligen Anwendungsfall auch durch Vorgabe von Default-Einstellungen aus dem Boot-Speicherbereich 50 oder 51. Diese Einstellungen sind nicht so minimalistisch, dass kein regulärer Arbeitsbetrieb der Motorsteuerung 100 möglich ist, enthalten aber auch nicht den vollständigen Satz an ersten und zweiten Parametern, wie er in den zuvor beschriebenen Beispielen realisiert wurde. Eine reduzierte Default-Einstellung, die für eine Mehrzahl von Anwendungsfällen passend erscheint, würde im Zuge des Inbetriebnehmens vom Boot-Speicher in den Arbeitsspeicher 50a übertragen und die Steuerung danach der Maschinensteuerung übergeben, welche die Default-Einstellung im Zuge des Betriebs durch eigene Anpassungsverfahren und Identifizierungs-Möglichkeiten verbessert und auf den Anwendungsfall zuschneidet. Die Rückspeicherung verbessert dann die Default-Speicherung in den Boot-Speicherbereichen 50 oder 51.

Es ist bevorzugt, dass die Default-Einstellung zumindest den Typ der Maschine 80 oder 81 identifizieren, also auf diesen hin zugeschnitten und ausgerichtet sind.

Vorteilhafte Ausgestaltungen sind auch die Unterteilung des Boot-Speichers 50 als Modul in zwei eigenständige Module, welche eigenständig entnommen werden können. Von einem dieser Module wird die erste und zweite Gruppe von Parametern ausgelesen und in den Arbeitsspeicher 50a geschrieben. Beim Datenabgleich im Sinne eines Rücklernens erfolgt das Schreiben auf beide eigenständige Module gleichzeitig. Eines dieser Module wird damit repliziert und kann als eigenständiges Modul entnommen werden und für eine andere Inbetriebnahme als Master verwendet werden. Dort kann wiederum eine Replikation erfolgen, wie auch beim ersten Inbetriebnahmesystem, welchem ein neuer eigenständiger Speicher eingesteckt wird, nachdem der zweite Speicher für die nächste Inbetriebnahme entnommen wurde.

Die aus dem ersten Inbetriebnahmefall gewonnenen Informationen werden so auf eine Vielzahl von entnehmbaren, eigenständigen Boot-Speichern abgespeichert, welche sich dann für die Serien-Inbetriebnahme vervielfachen lassen und eine Vielzahl von Antrieben in einer einfachen Weise und ohne hoch qualifizierte Inbetriebnahme-Ingenieure verwendet werden können.

Eine andere Verwendungsweise der zwei oder mehr eigenständigen Bootspeicher 50 (dann als eigenständige Speicher-Elemente 50' und 50") ist möglich. Einer davon kann als Dauer-Backup in einem Schaltschrank an einer sicheren Stelle aufbewahrt werden, so dass er für den Fall eines Ausfalls oder eines Fehlers als Not-Backup zur Verfügung steht. Es versteht sich, dass dieser außerhalb des Steckplatzes 15 gelagerte Not-Backup 50" nicht an der Aktualisierung teilnimmt, welche der Haupt-Boot-Speicher 50, dann als 50', erfährt. Für einen solchen Ausgleich kann eine separate Routine im Reglerbereich 12 lauffähig geschaltet werden, die dann getriggert wird, wenn der nicht aktualisierte Speicher 50" neben den Haupt-Bootspeicher 50' in den Sockel 15 eingesteckt wird. Der Sockel 15 ist dabei verlängert oder die Speicher sind jeweils verkürzt.

Andere Möglichkeiten sind parallele USB-Ports, von denen mehrere vorgesehen sein können. Es können dann auch Aktualisierungen von mehr als nur zwei Speichern vorgenommen werden. Die Schnittstelle 15 als "Sockel" soll deshalb allgemein so verstehbar sein, dass es eine Datenverbindung von dem entnehmbaren Speicher 50 oder 50' oder 50" oder weiteren ist, welche Datenverbindung neben der elektrischen Kopplung auch eine physische Haltefunktion aufzubringen vermag.

Das Triggern einer Aktualisierungsroutine im Reglerabschnitt 12 erfolgt bei der Erkennung eines neu eingesteckten Bootspeichers, der entweder alleinig oder zusätzlich zu einem Master-Bootspeicher 50 in einen der vorhandenen Sockelplätze 15 eingesteckt wird. Die Speichergröße muss nicht umfassend sein, sie kann kleiner als 10 MByte oder kleiner als 5 MByte ausgebildet werden. Selbst dann, wenn tragbare Speichersticks verwendet werden, welche höhere Speichervolumen haben, kann die Handhabung ausschlaggebend für die Verwendung eines größeren Speichers sein, der selbst aber nicht vollständig ausgenutzt wird.

Das Rückspeichern bei einem Einstecken des Boot-Speichers in den Sockel als "Aufnahme" 15 kann auf zwei Arten erfolgen. Entweder es erfolgt ein Gesamtabgleich durch Übertragung sämtlicher erster und zweiter Parameter aus dem Hauptspeicher 50a des Reglerbereichs 12, oder es findet ein Vergleich statt, welche Daten aus den gesamten maschinenbezogenen Daten in dem zugesteckten Speicher zu aktualisieren sind und diese werden dann aktualisiert. Letzterer Transfer ist der zeitlich weniger Aufwand erfordernde, erster Transfer ist vereinfacht durchführbar.

Die zuvor beschriebenen Ausführungen lassen sich auf verschiedene Einsätze anwenden. Einen Gerätetausch, einen intelligenten Antrieb, eine Inbetriebnahme und eine Serien-Inbetriebnahme, ebenso wie eine Backup-Sicherung der für den Anwendungsfall erlernten maschinenbezogenen Daten.

Für die Serien-Inbetriebnahme kann noch in Betracht kommen, dass dem entnehmbaren Boot-Speicherbereich 50 eine Bus-Adresse zugeordnet wird. Diese kann über Codierschalter auf der Platine des Speicherbereichs eingestellt sein und auch geändert werden. Auf der Platine ist dabei auch eine Erhaltungsbatterie vorgesehen, oder die Art des Speichertyps ist für eine langfristige und dauerhafte Erhaltung der eingespeicherten Daten entsprechend gewählt.

Ein Einstecken des Speichers in den Sockel 15 (auch zu verstehen als Bus-Steckplatz) löst den Datenabgleich oder zumindest zunächst den Datenvergleich mit den im Arbeitsspeicher 50a vorhandenen Daten aus. War der Boot-Speicher 50 bereits eingesteckt, bevor die Maschinensteuerung 100 eingeschaltet wird, verläuft die Übertragung der maschinenbezogenen Daten in umgekehrter Reihenfolge. Der entnehmbare Boot-Speicherbereich 50 kann danach bei anderen Inbetriebnahmen verwendet werden.

Statt einer Einstellung mit einem Codierschalter kann die Bus-Adresse auch Bestandteil der ersten Gruppe von Parametern sein. Dies entspricht sinngemäß einer indirekten Adressierung.

Jedes weitere Boot-Speichermodul, das mit nicht vollständigen oder unvollständigen Daten im Steckplatz 15 eingesteckt wird, erhält die aktualisierten Daten von dem Arbeitsspeicher 50a einer bereits in Betrieb genommenen und im Betrieb befindlichen Maschine eines Antriebsregler-Systems aus Maschine und Maschinensteuerung. Die Vervielfachung der vorhandenen maschinenbezogenen Daten für weitere Inbetriebnahmen ist so möglich.

Ein Tausch zumindest eines Bauteils oder eines Geräts im Umfeld der Maschinensteuerung, insbesondere aber der gesamten Hauptplatine 100 der Maschinensteuerung, führt nicht zum Verlust von schon erhaltenen und im Betrieb erlernten neuen Parametern. Diese befinden sich auf dem Boot-Speicher 50 und wurden nach und nach im Zuge ihres Entstehens in diesen Speicherbereich hinein geschrieben. Auch ein plötzlicher Ausfall der Maschinensteuerung 100 ist also keine Ursache mehr, die vorhandenen Daten verloren geben zu müssen, vielmehr sind sie nicht nur weitgehend, sondern weitestgehend aktualisiert im mechanisch entnehmbaren Boot-Speicher 50 gesichert. Sein Herausnehmen von der zu tauschenden Maschinensteuerung 100 und das Einstecken in einen nicht dargestellten Steckplatz 15* einer neu installierten Maschinensteuerung 100* (nicht gezeigt) macht diese sogleich zu einem vollständigen Ersatz der bisherigen Maschinensteuerung 100, ohne personell und zeitlich aufwendige Inbetriebnahme.

Dies gilt auch für Feldausfälle durch Defekte im Leistungs- oder Steuerteil der Maschinensteuerung 100.

## Patentansprüche

1. **Verfahren** zur Serien-Inbetriebnahme von mehreren elektro-maschinellen Antriebsregler-Systemen (80,100) umfassend jeweils eine Maschine (80,81) und eine Maschinensteuerung (100;90,95), wobei
(a) ein Boot-Speicherbereich (50) maschinenbezogene Daten speichert, welche zumindest mehrere erste Parameter für mehrere Regler (12) und mehrere anwendungsspezifische zweite Parameter eines der Antriebsregler-Systeme umfassen;
(b) die mehreren ersten und zweiten Parameter in dem Boot-Speicherbereich dauerhaft gespeichert sind, welcher Boot-Speicherbereich (50) als Modul organisiert ist, welches aus einer ersten Maschinensteuerung (100;90,95) entnommen und in eine weitere Maschinensteuerung übernommen wird;
(c) eine Übertragung der maschinenbezogenen Daten von dem Boot-Speicherbereich (50) zu der weiteren Maschinensteuerung erfolgt;
(d) wobei ein Einstecken des Moduls in die erste Maschinensteuerung (90, 95,100) bei einem in Betrieb befindlichen elektro-maschinellen Antriebsregler-System (80,100) ein Übertragen der maschinenbezogenen Daten aus einem Spiegelboot-Speicherbereich (50a) der Maschinensteuerung in den Boot-Speicherbereich (50) auslöst.

2. Verfahren nach Anspruch 1, wobei die ersten und zweiten Parameter alle für einen Betrieb der Maschine (80) und der Maschinensteuerung (100;90,95) notwendigen Parameter umfassen.

3. Verfahren nach Anspruch 1 oder 2, wobei die anwendungsspezifischen zweiten Parameter auch anwendungsspezifische Programme enthalten, welche als Anwendungsprogramme auf einen jeweiligen Anwendungsfall eines Antriebsregler-Systems zugeschnitten sind.

4. Verfahren nach einem der vorhergehenden Ansprüche, wobei die Maschinensteuerung (90, 95,100) vor ihrer Inbetriebnahme ausgebildet und eingerichtet ist, bei ihrer Inbetriebnahme die ersten und anwendungsspezifischen zweiten Parameter aus dem Boot-Speicherbereich (50) zu lesen, zu übertragen und in einem, in einem Arbeitsspeicher der Maschinensteuerung (90, 95,100) vorgesehenen Spiegelboot-Speicherbereich (50a) abzuspeichern, wobei alle in dem Spiegelboot-Speicherbereich befindlichen maschinenbezogenen Daten überschrieben werden.

5. Verfahren nach Anspruch 3 oder 4, wobei mit der Übertragung der maschinenbezogenen Daten auch Anwendungsprogramme im Spiegelboot-Speicherbereich (50a) zumindest teilweise überschrieben werden, mit Anwendungsprogramm-Daten aus dem Boot-Speicherbereich (50) als Teil der anwendungsspezifischen zweiten Parameter.

6. Verfahren nach Anspruch 5, wobei in einem Arbeitsspeicher (50a) der Maschinensteuerung gespeicherte Anwendungsprogramm-Daten von außen verändert werden, zur Veränderung der Verhaltensweise des Anwendungsprogramms.

7. Verfahren nach Anspruch 6, wobei eine Änderung von außen durch einen Einfluss eines PC-Tools erfolgt.

8. Verfahren nach Anspruch 6, wobei aus dem Spiegelboot-Speicher (50a) eine Übertragung von zumindest Teilen von Anwendungs-Programmen zu dem Boot-Speicherbereich (50) erfolgt, und hier die entsprechenden Teile der gespeicherten Anwendungsprogramme überschrieben werden.

9. Verfahren nach Anspruch 8, wobei ein jeweils ganzes Anwendungsprogramm, beispielsweise ein Reglerprogramm oder ein Überwachungsprogramm, übertragen und überschrieben wird.

10. Verfahren nach Anspruch 1, wobei eine erste Inbetriebnahme und eine Folgeinbetriebnahme erfolgt.

11. Verfahren nach Anspruch 1, wobei nach einem Geräte- oder Teiletausch eine erneute Inbetriebnahme erfolgt.

12. Verfahren nach Anspruch 1, wobei das Einstecken des Boot-Speicherbereichs (50) in die Maschinensteuerung (90, 95,100) bei einem in Betrieb befindlichen maschinellen Antriebsregler-System (80,100) einen Vergleich auslöst, bei welchem die einen maschinenbezogenen Daten in einem Spiegelboot-Speicherbereich (50a) eines Arbeitsspeichers mit den anderen maschinenbezogenen Daten in dem Boot-Speicherbereich (50) verglichen werden.

13. Verfahren nach Anspruch 12, wobei ein Datenabgleich nur der unterschiedlichen maschinenbezogenen Daten in den beiden Speicherbereichen durch ein Übertragen der maschinenbezogene Daten aus dem Spiegelboot-Speicherbereich (50a) der Maschinensteuerung (90, 95,100) in den Boot-Speicherbereich (50) erfolgt.

14. Verfahren nach einem der Ansprüche 1 bis 3, wobei in einem regulären Betrieb des Antriebsregler-Systems (80,100) ein Datenabgleich zumindest einiger der maschinenbezogenen Daten erfolgt, indem aus der Maschinensteuerung (90,95,100) aktuelle oder aktualisierte erste und/oder zweite Parameter in den Boot-Speicherbereich (50) übertragen werden, und dort die entsprechenden ersten bzw. zweiten Parameter im Boot-Speicherbereich überschrieben werden.

15. Verfahren nach Anspruch 14, wobei bei dem Datenabgleich keine Anwendungsprogramme im Boot-Speicherbereich überschrieben werden.

16. Verfahren nach Anspruch 4, wobei nach einem Abschluss einer Übertragung aus dem Boot-Speicherbereich (50) in den Spiegelboot-Speicherbereich (50a) eine Steuerung der Maschine (80) über einen Steuerungsabschnitt (95) der Maschinensteuerung (90, 95,100) mit den ersten und zweiten Parametern, insbesondere den anwendungsspezifischen Programmen im Spiegelboot-Speicherbereich (50a) erfolgt.

17. Verfahren nach Anspruch 4 oder 16, wobei keine direkte Steuerung der Maschine (80) aus dem Boot-Speicherbereich (50) erfolgt.

18. Verfahren nach Anspruch 4, wobei eine Erkennung auf gültige Parameter und/oder gültige Anwendungsprogramme im Spiegelboot-Speicherbereich (50a) eine Übertragung aus dem Boot-Speicherbereich (50) in den Spiegelboot-Speicherbereich veranlasst.

19. Verfahren nach Anspruch 4 oder 18, wobei ein Anschalten des maschinellen Antriebsregler-Systems (80,100) die Übertragung aus dem Boot-Speicherbereich triggert.

20. Verfahren nach Anspruch 4, 18 oder 19, wobei ein Ausschalten des maschinellen Antriebsregler-Systems ein Übertragen des Spiegelboot-Speicherbereichs in den Boot-Speicherbereich (50) triggert.

21. Verfahren nach Anspruch 1, wobei eine Kontaktleiste (15) als Sockel auf der Maschinensteuerung oder der diese vornehmenden Platine (1) angeordnet ist, um den Boot-Speicherbereich einzustecken und abzustecken, mit mechanischer Halterung und elektrischer Kopplung.

22. Verfahren nach Anspruch 1, wobei ein Steckplatz für das Einstecken oder Abstecken des Boot-Speicherbereichs (50;50',50") vorgesehen ist.

23. Verfahren nach Anspruch 1, wobei bei einem eingesteckten Boot-Speicherbereich (50) und einem späteren Einschalten der Maschinensteuerung, die maschinenbezogenen Daten von dem Boot-Speicherbereich zu der Maschinensteuerung übertragen werden.

24. Verfahren nach einem der Ansprüche 1 bis 9, wobei die im Boot-Speicherbereich (50) vor einer ersten Inbetriebnahme gespeicherten ersten und zweiten Parameter Default-Einstellungen sind, welche zumindest nicht vollständig auf einen jeweiligen Anwendungsfall zugeschnitten sind.

25. Verfahren nach Anspruch 24, wobei die ersten und zweiten Parameter vor einer ersten Inbetriebnahme nur hinsichtlich eines Typs der Maschine (80) zugeschnitten und ausgerichtet sind.

26. Verfahren nach Anspruch 1, wobei der absteckbare und wieder einsteckbare Boot-Speicherbereich als Modul in zwei gesondert entnehmbare, jeweils eigenständige Boot-Speicherbereiche (50',50") unterteilt ist.

27. Verfahren nach Anspruch 1 oder Anspruch 26, wobei der Boot-Speicherbereich kleiner als 10 MB in seiner Speichergröße ist, insbesondere unterhalb von 5 MB Speichervolumen besitzt.

## Claims

1. Method for the serial commissioning of a number of electro-mechanical drive control systems (80,100), each comprising a machine (80,81) and a machine controller (100;90,95), wherein
(a) a boot memory area (50) stores machine-related data comprising at least a number of first parameters for a number of controllers (12) and a number of application-specific second parameters of one of the drive control systems;
(b) the numbers of first and second parameters are permanently stored in the boot memory area, which boot memory area (50) is organised as module that is removed from a first machine controller (100;90,95) and inserted into a further machine controller;
(c) a transfer of machine-related data takes place from the boot memory area (50) to the further machine controller;
(d) wherein an insertion of the module into the first machine controller (90,95,100) initiates a transfer of the machine-related data from a mirror boot-memory area (50a) of the machine controller to the boot area (50), when the electro-mechanical drive control system (80,100) is in operation.

2. Method according to claim 1, wherein the first and second parameters comprise all parameters necessary for an operation of the machine (80) and the machine controller (100;90,95).

3. Method according to claim 1 or 2, wherein the application-specific second parameters also contain application-specific programs which are adapted as application programs to a respective application of a drive control system.

4. Method according to any one of the previous claims, wherein the machine controller (90,95,100) before its commissioning is configured and arranged to read, transfer and store the first and application-specific second parameters of the boot memory (50) area to a mirror boot memory area (50a) provided in a main memory of the machine controller (90, 95, 100), when it is commissioned, wherein all machine-related data contained in the mirror boot memory area are overwritten.

5. Method according to claim 3 or 4, wherein together with the transfer of machine-related data also application programs in the mirror boot memory area (50a) are overwritten at least partially with application program data from the boot memory area (50) as part of the application-specific second parameters.

6. Method according to claim 5, wherein application program data stored in a main memory (50a) of the machine controller are modified from outside in order to change the behaviour of the application program.

7. Method according to claim 6, wherein a modification from outside takes place due to the influence of a PC-tool.

8. Method according to claim 6, wherein a transfer takes place of at least parts of application programs from the mirror boot memory (50a) to the boot memory area (50) and the respective parts of the stored application programs are overwritten here.

9. Method according to claim 8, wherein an entire application program, for example a control program or a monitoring program, is transferred and overwritten.

10. Method according to claim 1, wherein a first commissioning and a subsequent commissioning take place.

11. Method according to claim 1, wherein a new commissioning takes place after a replacement of devices or parts.

12. Method according to claim 1, wherein the insertion of the boot memory area (50) into the machine controller (90,95,100) induces a comparison when the mechanical drive control system (80,100) is in operation, comparing the machine-related data contained in a mirror boot memory area (50a) of a working memory to the other machine-related data contained in the boot memory area (50).

13. Method according to claim 12, wherein a data reconciliation takes place only concerning the differing machine-related data in both memory areas by means of transferring machine-related data from the mirror boot memory area (50a) of the machine controller (90,95,100) to the boot memory area (50).

14. Method according to one of the claims 1 to 3, wherein during a regular operation of the drive control system (80,100) a data reconciliation of at least some of the machine-related data takes place, transferring current or updated first and/or second parameters from the machine controller (90,95,100) to the boot memory area (50) and overwriting there the respective first or second parameters in the boot memory area.

15. Method according to claim 14, wherein during the data reconciliation no application programs are overwritten in the boot memory area.

16. Method according to claim 4, wherein upon a completion of a transfer from the boot memory area (50) to the mirror boot memory area (50a) a control of the machine (80) takes place with the help of a control section (95) of the machine controller (90,95,100) with the first and second parameters, in particular the application-specific programs in the mirror boot memory area (50a).

17. Method according to claim 4 or 16, wherein no direct control of the machine (80) takes place from the boot memory area (50).

18. Method according to claim 4, wherein an identification of valid parameters and/or valid application programs in the mirror boot memory area (50a) induces a transfer from the boot memory area (50) to the mirror boot memory area.

19. Method according to claim 4 or 18, wherein switching on the mechanical drive control system (80,100) triggers the transfer from the boot memory area.

20. Method according to claim 4, 18 or 19, wherein switching off the mechanical drive control system triggers a transfer of the mirror boot memory area to the boot memory area (50).

21. Method according to claim 1, wherein a contact strip (15) is arranged as a base at the machine controller or at the corresponding board (1) for the insertion or removal of the boot memory area, with mechanical mount and electric coupling.

22. Method according to claim 1, wherein a socket is provided for inserting or removing the boot memory area (50;50',50").

23. Method according to claim 1, wherein the machine-specific data of the boot memory area are transferred to the machine controller, when the boot memory area (50) is inserted and the machine controller is subsequently switched on.

24. Method according to one of the claims 1 to 9, wherein the first and second parameters stored in the boot memory are (50) before the first commissioning are default settings that are at least not completely adapted to the specific application.

25. Method according to claim 24, wherein before a first commissioning the first and second parameters are adapted and aligned only with regard to a certain type of the machine (80).

26. Method according to claim 1, wherein the removable and re-insertable boot memory area as a module is divided into two individually removable and respectively independent boot memory areas (50',50").

27. Method according to claim 1 or claim 26, wherein the boot memory area is smaller than 10 MB in its memory size, in particular has less than 5 MB storage capacity.

## Revendications

1. Procédé pour la mise en exploitation en série de plusieurs systèmes de régulateurs d'entraînement de machine électrique (80, 100) comprenant respectivement une machine (80, 81) et une commande de machine (100; 90, 95), dans lequel
(a) une zone de mémoire de démarrage (50) enregistre des données relatives aux machines, qui comprennent au moins plusieurs premiers paramètres pour plusieurs régulateurs (12) et plusieurs seconds paramètres spécifiques à l'application d'un des systèmes de régulateur d'entraînement;
(b) les plusieurs premiers paramètres et plusieurs seconds paramètres sont enregistrés de façon permanente dans la zone de mémoire de démarrage (50) et cette zone de mémoire de démarrage (50) est organisée sous la forme d'un module, qui peut être retiré d'une première commande de machine (100; 90, 95) et repris dans une autre commande de machine;
(c) on effectue une transmission des données relatives aux machines depuis la zone de mémoire de démarrage (50) jusqu'à l'autre commande de machine;
(d) dans lequel un enfichage du module dans la première commande de machine (90, 95, 100) avec un système de régulateur d'entraînement de machines électriques en fonctionnement (80, 100) déclenche une transmission des données relatives aux machines depuis une zone de mémoire de démarrage miroir (50a) de la commande de machine jusqu'à la zone de mémoire de démarrage (50).

2. Procédé selon la revendication 1, dans lequel les premiers et les seconds paramètres comprennent tous les paramètres nécessaires pour une exploitation de la machine (80) et de la commande de machine (100; 90, 95) .

3. Procédé selon une revendication 1 ou 2, dans lequel les seconds paramètres spécifiques à l'application contiennent également des programmes spécifiques à l'application, qui sont créés sur mesure sous la forme de programmes d'application pour un cas d'application respectif d'un système de régulateur d'entraînement.

4. Procédé selon l'une quelconque des revendications précédentes, dans lequel la commande de machine (90, 95, 100) est configurée et conçue avant sa mise en exploitation pour, lors de sa mise en exploitation, lire les premiers paramètres et les seconds paramètres spécifiques à l'application à partir de la zone de mémoire de démarrage (50), les transmettre et les enregistrer dans une zone de mémoire de démarrage miroir (50a) prévue dans une mémoire de travail de la commande de machine (90, 95, 100), dans lequel on écrase toutes les données relatives aux machines se trouvant dans la zone de mémoire de démarrage miroir.

5. Procédé selon une revendication 3 ou 4, dans lequel avec la transmission des données relatives aux machines on écrase également au moins en partie des programmes d'application dans la zone de mémoire de démarrage miroir (50a), avec des données de programmes d'application depuis la zone de mémoire de démarrage (50) comme partie des seconds paramètres spécifiques à l'application.

6. Procédé selon la revendication 5, dans lequel des données de programme d'application enregistrées dans une mémoire de travail (50a) de la commande de machine sont changées depuis l'extérieur, pour le changement du mode de comportement du programme d'application.

7. Procédé selon la revendication 6, dans lequel un changement depuis l'extérieur est effectué par une influence d'un outil de PC.

8. Procédé selon la revendication 6, dans lequel on effectue à partir de la zone de mémoire de démarrage miroir (50a) une transmission d'au moins des parties de programmes d'application vers la zone de mémoire de démarrage (50), et on y écrase les parties correspondantes des programmes d'application enregistrés.

9. Procédé selon la revendication 8, dans lequel on transmet et on écrase un programme d'application chaque fois complet, par exemple un programme de régulateur ou un programme de surveillance.

10. Procédé selon la revendication 1, dans lequel on effectue une première mise en exploitation et une exploitation renouvelée.

11. Procédé selon la revendication 1, dans lequel on effectue une nouvelle mise en exploitation après un échange d'appareil ou de parties.

12. Procédé selon la revendication 1, dans lequel l'enfichage de la zone de mémoire de démarrage (50) dans la commande de machine (90, 95, 100) avec un système de régulateur d'entraînement de machines (80, 100) en fonctionnement déclenche une comparaison, par laquelle on compare les premières données relatives aux machines dans une zone de mémoire de démarrage miroir (50a) d'une mémoire de travail avec les autres données relatives aux machines dans la zone de mémoire de démarrage (50).

13. Procédé selon la revendication 12, dans lequel on effectue un alignement des données uniquement des données relatives aux machines différentes dans les deux zones de mémoire par une transmission des données relatives aux machines depuis la zone de mémoire de démarrage miroir (50a) de la commande de machine (90, 95, 100) jusqu'à la zone de mémoire de démarrage (50).

14. Procédé selon l'une quelconque des revendications 1 à 3, dans lequel, dans une exploitation régulière du système de régulateur d'entraînement (80, 100), on effectue un alignement des données uniquement de quelques-unes des données relatives aux machines, par le fait que l'on transmet depuis la commande de machine (90, 95, 100) des premiers et/ou des seconds paramètres actuels ou actualisés dans la zone de mémoire de démarrage (50), et on y écrase les premiers ou les seconds paramètres correspondants dans la zone de mémoire de démarrage.

15. Procédé selon la revendication 14, dans lequel on n'écrase aucun programme d'application dans la zone de mémoire de démarrage lors de l'alignement des données.

16. Procédé selon la revendication 4, dans lequel après la fin d'une transmission depuis la zone de mémoire de démarrage (50) jusqu'à la zone de mémoire de démarrage miroir (50a), on effectue une commande de la machine (80) par l'intermédiaire d'une partie de commande (95) de la commande de machine (90, 95, 100) avec les premiers et les seconds paramètres, en particulier les programmes spécifiques à l'application dans la zone de mémoire de démarrage miroir (50a).

17. Procédé selon une revendication 4 ou 16, dans lequel on n'effectue aucune commande directe de la machine (80) à partir de la zone de mémoire de démarrage (50).

18. Procédé selon la revendication 4, dans lequel une détection de paramètres valides et/ou de programmes d'application valides dans la zone de mémoire de démarrage miroir (50a) provoque une transmission de la zone de mémoire de démarrage (50) à la zone de mémoire de démarrage miroir.

19. Procédé selon une revendication 4 ou 18, dans lequel un branchement du système de régulateur d'entraînement de machines (80, 100) entraîne la transmission à partir de la zone de mémoire de démarrage.

20. Procédé selon une revendication 4, 18 ou 19, dans lequel un débranchement du système de régulateur d'entraînement de machines entraîne une transmission de la zone de mémoire de démarrage miroir à la zone de mémoire de démarrage (50).

21. Procédé selon la revendication 1, dans lequel une barrette de contacts (15) est disposée en tant que socle sur la commande de machine ou sur la plaquette (1) portant celle-ci, pour l'engagement et le désengagement de la zone de mémoire de démarrage, avec un support mécanique et un couplage électrique.

22. Procédé selon la revendication 1, dans lequel il est prévu un site d'enfichage pour l'engagement ou le désengagement de la zone de mémoire de démarrage (50; 50', 50").

23. Procédé selon la revendication 1, dans lequel avec une zone de mémoire de démarrage (50) enfichée et un branchement ultérieur de la commande de machine, on transmet les données relatives aux machines de la zone de mémoire de démarrage à la commande de machine.

24. Procédé selon l'une quelconque des revendications 1 à 9, dans lequel les premiers et les seconds paramètres enregistrés dans la zone de mémoire de démarrage (50) avant une première mise en exploitation sont des réglages par défaut, qui ne sont au moins pas totalement créés sur mesure pour un cas d'application particulier.

25. Procédé selon la revendication 24, dans lequel les premiers et les seconds paramètres sont créés sur mesure et orientés avant une première mise en exploitation uniquement en ce qui concerne un type de la machine (80).

26. Procédé selon la revendication 1, dans lequel la zone de mémoire de démarrage pouvant être déconnectée et de nouveau connectée est divisée sous forme de module en deux zones de mémoire de démarrage (50', 50") respectivement autonomes, amovibles séparément.

27. Procédé selon la revendication 1 ou la revendication 26, dans lequel la zone de mémoire de démarrage est inférieure à 10 MB en taille de mémoire, en particulier possède un volume de mémoire inférieur à 5 MB.
